# EUROPEAN PATENT APPLICATION

(11) **EP 2 168 547 A1**
(43) Date of publication of application: **31.03.2010**
(21) Application number: 08165409.7
(22) Date of filing: 29.09.2008
(51) Int. Cl.: A61G 13/02, A61G 13/06, A61G 13/12, A61G 15/02

(54) **Treatment couch**

(71) Applicant: Gymnauniphy, Naamloze Vennootschap, 3740 Bilzen (BE)
(72) Inventor: Wijnmaalen, Piet, B - 3001, Heverlee (BE)
(74) Representative: Luys, Marie-José A.H.

(57) **Abstract**

Treatment couch (1) comprising a first (6) and a second (7) drive means, the first (6) and second (7) drive means being provided to drive different movements of at least one part (2, 3, 4, 5) of the treatment couch (1), and handsfree operating means (10) for operating the drive means (6, 7) in response to both a first non-tactile user input (11) selecting the drive means (6, 7) to be activated and a second tactile user input (12) for activating the selected drive means (6, 7), wherein the operating means (10) are organized such that the selected drive means (6, 7) are activated only as long as the second tactile input (12) is operated by the user.

## Description

The present invention relates to a treatment couch according to the preamble of the first claim.

EP1149571A2 describes an operating table for controlling a first and a second drive means which each drives a different part of a top of the operating table. The operating table comprises handsfree operating means for operating the two drive means in response to both a voice command, by which both the drive means and the action to be performed by the selected drive means are selected and a subsequent confirmation of the action by pressing a foot pedal.

The known table operates as follows. After confirmation of the voice command by pressing the pedal, movement of the part of the operating table is started. The movement is stopped by giving another vocal command which again needs confirmation by pressing the pedal or by using a pedal especially provided for that purpose.

The system described by EP1149571A2 has the disadvantage that operation can lead to unsafety for the person being treated.

Accordingly it is an aim of the current invention to provide a treatment couch which is safer to operate.

This is achieved according to the present invention with a system showing the technical features of the characterising portion of the first claim.

Thereto, the operating means are organized such that the selected drive means are activated only as long as the second tactile input is operated by the user.

An analysis of the prior art has shown that the difficulty in operation is caused by the fact that either both a voice command and a confirmation by pressing the foot pedal or pressing a specific pedal, are needed to stop the movement. Both options to stop the movement of the part of the operating table may be cumbersome: the vocal command and confirmation by the pedal may both take a considerable amount of time, during which the movement is still effected, and the additional pedal to stop the movement needs to be pressed, which can also take a considerable amount of time during which the movement is still effected. In addition the user may not always be sufficiently close to the additional pedal to be able to reach it. In such a case the user needs to move, taking an additional amount of time during which the movement is still effected, before he can reach the additional pedal to stop the movement.

A further analysis of the prior art has shown that there is a risk that vocal commands are misinterpreted. As a consequence the wrong part of the operating table and/or the wrong movement of the part can be performed by the drive means. Since it takes a considerable amount of time to stop the movement, the position of a patient occupying the operating table can be substantially affected which is not at all desirable.

Moreover, when a command needs to be repeated, the full voice command needs to be repeated and every time the pedal needs to be pressed, which is also cumbersome.

According to the invention the operating means are organized such that the selected drive means are activated only as long as the second tactile input is operated by the user. The inventor has found that in this way the movement of the part of the treatment couch stops immediately, i.e. as soon as the tactile input is released. A separate command or operation is no longer needed for stopping the movement. The movement of the moving part of the treatment couch therefore can be stopped more easily and more rapidly, which enhances safety for the person being treated.

Moreover, when the first non-tactile user input is accidentally misinterpreted, the wrong movement can be stopped immediately by releasing the tactile input so that the position of the patient can be less affected.

Such operating means moreover allows that since movement of the part of the treatment couch stops immediately upon release of the tactile input, no additional means have to be provided to stop the movement of the part of the treatment couch, such as the additional pedal described by EP1149571A2, enabling a simpler construction of the operating means.

Use of the first non-tactile user input according to the invention also causes that the operator does no longer have to touch, move, etc. a part of the operating means to select the desired drive means. As a result, the operator can move more freely around the treatment couch.

As used herein, with "the operating means are organized such that the selected drive means are activated only as long as the second tactile input is operated by the user" is intended to mean that the components of the operating means are configured for activating the selected drive means as long as the second tactile input is operated, i.e. for switching on the selected drive means when the user operates the tactile input, keeping the selected drive means active as long as the user operates the tactile input and switching off the selected drive means when the user releases the tactile input. An alternative definition could be that the operating means comprises switching components interconnecting the tactile and non-tactile input means and the first and second drive means in such a way that only during user operation of the second tactile input the selected drive means are put in operation mode.

Examples of preferred embodiments answering to the above definition are the following. In case the drive means are electric drive means, the operating means can comprise components for closing a conductive path between the selected drive means and an electric power source as long as the user operates the second tactile input, which is for example an auto-release switching device which returns to its neutral state (interrupting the conductive path) as soon as it is released. In case the drive means are pneumatic or hydraulic drives and a pressuring device, the operating means can comprise valves and an appropriate valve controller which controls the valves in response to the tactile and non-tactile inputs to provide appropriate pneumatic or hydraulic pressure to the selected drive. In this case, the operating means control the valves to supply pressure to the selected drive as long as the second tactile input is operated by the user.

In a preferred embodiment of the treatment couch according to the invention, the second tactile input is switchable between three states; a first and second state for respectively activating the selected drive means in opposite directions of movement and a third state in which the selected drive means are not activated, and in that the first non-tactile user input is provided to select which of the drive means is connected to the second tactile user input. Such second tactile input allows that the direction of the movement activated by the drive means can be determined by the second tactile user-input. This simplifies the first non-tactile user inputs since the user only selects the drive means by the first non-tactile user input, not the direction. Additionally the risk of misinterpretation of a command is also reduced. The simplification and the reduced risk of misinterpretation making operating the treatment couch more easy, intuitive and safe.

In preferred embodiments of the treatment couch according to the invention, the first non-tactile user input is a voice command. When using a voice command as non-tactile user input, the independence of the position of the operator is combined with an intuitive use.

In preferred embodiments according to the invention the second tactile user input is accessible to the user from all sides of the treatment couch. When providing the treatment couch with such second tactile means, the selected drive means can be activated without the operator having to move to the second tactile means. The operator can activate the second user input independently from its position with respect to the treatment couch. This is especially convenient when the operator desires to activate the drive means when treating a patient on the treatment couch, in which case the operator often can not leave its position with respect to the treatment couch without disturbing the treatment of the patient.

In preferred embodiments, the second tactile user input comprises a foot switch extending substantially throughout the area of the treatment couch. It has been found that such a switch provides an easy way to activate the selected drive means from anywhere, independently from the position of the operator with respect to the treatment couch.

In preferred embodiments of the treatment couch according to the invention, the foot switch is provided to activate the selected drive means by a substantially horizontal movement. It has been found that such a foot switch is less prone to unwanted activation since it has been found that unwanted activation is often caused by a substantially vertical movement, for example by unwantedly putting weight on the second tactile means.

In preferred embodiments of the treatment couch according to the invention, the handsfree operating means are provided to operate one of the drive means as default when no first user input has been recorded during a predetermined time frame. It has been found that such treatment couches are more safe to use, since the risk that undesired drive means are activated is significantly reduced since one is not always sure of or even remembers the last first non-tactile user input given to the handsfree operating means. By operating a default drive means when no first non-tactile user input has been recorded during a predetermined time frame, one does not have to remember the given first user inputs for prolonged periods of time longer than the predetermined time frame. Such treatment couches moreover allow that after the drive means are selected by the first user input, the selected drive means can be repeatedly operated during the predetermined time frame by the second tactile user input without having to repeat the first user input, which can facilitate operation.

In preferred embodiments of the treatment couch according to the invention, the first drive means are provided to adjust the lying height of the treatment couch. The first drive means are preferably the default drive means. In such a case the drive means for adjusting the lying height of the treatment couch are automatically selected after expiration of the predetermined time frame. Since this adjustment is often made operation of the treatment couch can be facilitated.

In preferred embodiments of the treatment couch according to the invention the treatment couch is provided with an opening to receive at least part of the face of a person lying on the treatment couch. It has been found that the opening for receiving the face of the patient occupying the treatment couch offers more comfort tot the patient when lying on its front side.

Other details and advantages of the device according to the invention will become apparent from the enclosed figures and description of preferred embodiments of the invention.

Figure 1 shows a preferred embodiment of the treatment couch according to the invention.

Figure 2 shows a flow-chart illustrating an embodiment of operation of a treatment couch according to the invention.

Figure 3 shows a schematic overview of an embodiment of an electronic circuit for the operating means of a treatment couch according to the invention.

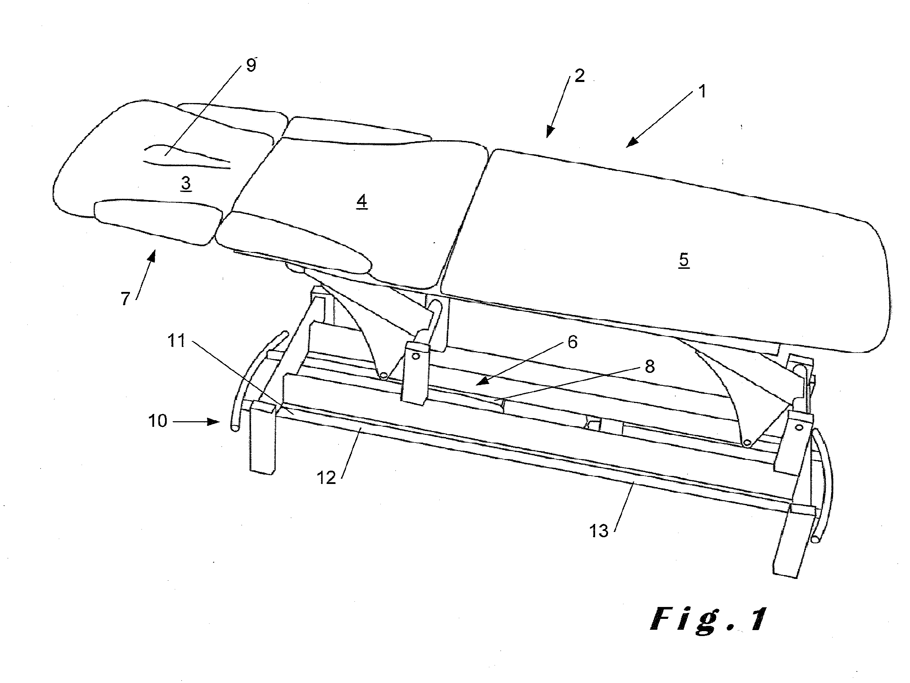

Figure 1 shows an embodiment of a treatment couch 1 according to the invention. The treatment couch 1 comprises a lying surface 2, provided to support a human body. The lying surface 2 comprises three parts 3, 4, 5: a head supporting part 3, a torso supporting part 4 and a leg supporting part 5.

The head supporting part 3 is provided with an opening 9 to receive at least part of the face of a person lying on the treatment couch 1.

The treatment couch 1 comprises a first 6 and a second 7 drive means provided to drive different movements of at least one part of the treatment couch 1. The first drive means 6 shown in figure 1 are provided to adjust the lying height of the treatment couch 1, i.e. to move the lying surface 2 up and down. The second drive means 7 are provided to adjust the position of the head supporting part 3 of the treatment couch 1, more specifically in a hinging up-and-down movement.

Preferably, the first 6, more preferably the first and second drive means 6, 7, comprise a linear actuator 8. The linear actuator 8 thereto for example comprises a worm gear connected to a motor. The rotational movement of the motor is converted into a longitudinal movement by the worm gear. Use of other types of gears known to the person skilled in the art, for transforming the rotational movement of the motor into a longitudinal movement for driving the movements of the corresponding part of the treatment couch are however possible.

The treatment couch 1 comprises handsfree operating means 10 for operating the drive means in response to both a first non-tactile user input 11 selecting the drive means 6, 7 to be activated and a second tactile user input 12 for activating the selected drive means 6, 7. The operating means 10 are organized such that the selected drive means are activated only as long as the second tactile input 12 is operated by the user.

The first non-tactile user input 11 for selecting the drive means 6, 7 is not shown in figure 1, but will be explained further on.

An example of the second tactile user input 12 is shown in figure 1 and is located in a lower part of the treatment couch 1 and is provided to be operated by a foot of the user.

The second tactile user input 12 shown in figure 1 comprises a foot switch 13 which extends substantially throughout the area of the treatment couch 1.

The foot switch 13 shown in figure 1 is provided to activate the selected drive means 6, 7 by a substantially horizontal movement. The switch can however be provided to activate the selected drive means 6, 7 in any other possible movement such as a vertical movement or a rotating movement. The foot switch 13 shown in figure 1 is provided to perform the horizontal movement in longitudinal direction of the treatment couch 1.

The selected drive means 6, 7 are only activated as long as the second tactile input 12 is operated by the user. As long as the second tactile user input 12, according to figure 1 the foot switch 13, is operated, in figure 1 by horizontally moving the foot switch 13 in a first direction to a extreme position or in a second direction opposing the first direction to a second position, the selected drive means 6, 7 will drive a first movement of the treatment couch 1 or a second movement of the treatment couch 1 and for example will move the first part 2 in an upward direction or a downward direction, depending on the direction in which the foot switch 12 is moved. When operation of the second tactile user input 12is stopped by the user, the driving of the movement by the selected drive means 6, 7 will stop. In figure 1, the foot switch 13 will automatically return to a central position with respect to first and second position and the movement of the lying surface 2 will stop. The automatic return of the foot switch 13 to its central position can for example be obtained by a spring or any other means known to the person skilled in the art.

In an alternative embodiment of the couch 10 shown in figure 1 the lying surface 2 can be provided to support for example an animal such as a dog, a horse, a cat, etc. Moreover, although the lying surface 2 shown in figure 1 is provided to receive a person in a lying position, for example on his back or for example on his front, this is not critical for the invention and the lying surface 2 can also be provided to receive a person, in a sitting position, a standing position, etc. The treatment couch can for example be used in physiotherapy, gynaecology, etc., as an operating table, a hospital bed, a dentist's chair, etc. When for example used in physiotherapy, the treatment couch 1 allows the user to operate the treatment couch 1 without substantial use of its hands due to which the treatment of the patient positioned on the treatment couch 1 is not substantially disturbed.

Although the lying surface 2 shown in figure 1 comprises three parts, in alternative embodiments of figure 1 the lying surface 2 can also comprise a single part. When only a single part is provided, preferably the lying surface itself, the part preferably is moveable by the first and second drive means 6, 7 in different movements as is illustrated later on.

The lying surface 2 can however also comprise two or more than three parts such as for example four, five, six, seven, eight, etc. These are however not critical for the invention and can be omitted. The different parts of the lying surface 2 preferably are provided to support a specific part of the person occupying the lying surface 2. Figure 1 for example shows that additional parts are provided to support the arms of the person occupying the lying surface 2.

The opening 9 in the lying surface 2 shown in figure 9 is not critical for the invention and alternative embodiments of figure 1, the opening 9 is omitted.

In alternative embodiments of the couch 10 shown in figure 1, the drive means 6, 7 can also be provided to move the corresponding part in a horizontal movement, a rotating movement, a vibrating movement, a tilting movement, etc instead of the substantially vertical movement for the lying surface 2 and the hinging movement for the head part 3, as shown in figure 1.

Although the first 6 and second 7 drive means shown in figure 1 are provided to drive movements of different parts, in this case the lying surface 2 and the head supporting part 3, of the treatment couch 1 in alternative embodiments of figure 1, the first 6 and second 7 drive means can also be provided to drive a single part, for example the lying surface 2 in different movements. It is for example possible that the first drive means 6 drive the lying surface 2 in an up-and-down movement and the second drive means 7 drive the lying surface 2 in a different movement, for example a horizontal movement.

In alternative embodiments of the couch 10 shown in figure 1, the drive means can also drive alternative parts and can for example drive the lying surface 2 and the torso supporting part 4 or the leg supporting part 5 or can for example drive the head supporting part 3 and the torso supporting part 4, the head supporting part 3 and the leg supporting part 5, the torso supporting part 4 and the leg supporting part 5, etc.

In alternative embodiments of the couch 10 shown in figure 1 more than two drive means 6, 7 can be provided, such as for example three, four, five, six, seven, eight, etc. For example third drive means can be provided to drive the torso supporting part 4 and/or fourth drive means can be provided to drive the leg supporting part 5. Moreover, more than two drive means 6, 7 can be provided to drive one or more parts 2, 3, 4, 5 in different movements, as described above.

In alternative embodiments of the couch 10 shown in figure 1, the driving means 6, 7 comprise an alternative for the linear actuator 8 such as for example pneumatic driving means, magnetic driving means, etc. The used drive means 6, 7 depend on for example the desired movements of the corresponding part 2, 3, the power needed to perform the movements, etc.

In alternative embodiments of the couch 10 shown figure 1 the foot-switch 13 is provided only throughout a certain part of the area of the treatment couch 1. For example, only at a certain location in the form of a button which can be operated by the foot of the user or for example a lever which can be depressed along a certain side of the treatment couch 1. In other alternative embodiments of figure 1 the horizontal movement is performed along a direction transverse to the longitudinal direction of the treatment couch 10. In further alternative embodiment, the foot-switch can be formed by sensitive regions on a floor mat surrounding the couch 10.

In alternative embodiments of the embodiment of figure 1, other second tactile user inputs 12 are possible such as for example input means for receiving a signal from the legs, upper and/or lower legs, the knees, the hips, etc.

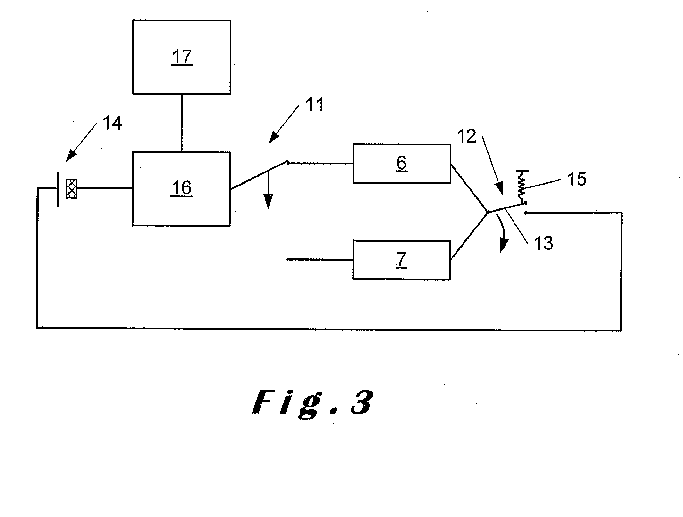

An example of operating means 10 is shown in figure 3 wherein the drive means 6, 7 are electric drive means 6, 7 and the operating means 10 comprise components for closing a conductive path between the selected drive means 6, 7 and an electric power source 14 as long as the user operates the second tactile input 12, which is for example an auto-release switching device which returns to its neutral state (interrupting the conductive path) as soon as it is released. In case the drive means 6, 7 are pneumatic or hydraulic drives and a pressuring device, the operating means 10 can comprise valves and an appropriate valve controller which controls the valves in response to the tactile and non-tactile inputs to provide appropriate pneumatic or hydraulic pressure to the selected drive 6, 7. In this case, the operating means 10 control the valves to supply pressure to the selected drive 6, 7 as long as the second tactile input is operated by the user.

In figure 3, the first non-tactile user input 11 for example is schematically indicated by a first switch, provided to switch between the drive means 6, 7 such that either the first or the second drive means are selected. The second tactile user input 12 is schematically indicated by a second switch which switches the drive means 6, 7 such that the selected drive means 6, 7 are driven by the electric power source 14. When the second tactile user input 12 is no longer operated it returns to a non conductive state such that the drive means are no longer powered by the power source 14. This has been symbolically indicated in figure 3 by a spring returning the switch to its non conductive state.

The first non-tactile user input 11 preferably comprises first non-tactile input means 17 and a non-tactile control unit 16 provided to receive and process a signal from the first non-tactile input means 17. The first non-tactile user input means 17 is provided to receive commands given by the user for selecting a drive means 6, 7. The first non-tactile user input means 17 communicates with the non-tactile control unit 16 and is provided to analyze the signals from the first non-tactile user input means 17 and selects the drive means 6, 7 corresponding to the command given by the user.

The first non-tactile user input means 17 for example comprises a microphone, or any other different means provided to record a vocal user command, the non-tactile control unit 16 for example comprises a processor provided to convert the command into a signal corresponding to selecting the appropriate drive means 6, 7. The command corresponding to a certain drive means 6, 7 is not critical for the invention and can be determined by the person skilled in the art. For example, the command can be "first part" or "lying surface" for selecting the lying surface 2 and/or "second part" or "head part" for selecting the head part 3. The commands can be adapted corresponding to the user using the treatment couch 1. For example, the language of the commands can be changed. It is also possible that audible commands other than spoken commands are used such as for example whistling, in which case melody, frequency, number of whistles, etc. can be used to select the desired part. The operating means can further be programmable so that the user can input commands as desired. Preferably a training sequence is implemented so that the user can train the operating means 10 to the characteristics of his/her own voice. When non-audible commands are used, the first non-tactile input means 17 and the non-tactile control unit 16 preferably are adapted to the commands used. Other non-audible commands for example are commands given by blowing, commands given by certain movements, commands given by a certain location of the user with respect to the treatment couch 10, etc.

The position of the first non-tactile tactile user input means 17, although not shown in figure 1, depends for example on the general position of the user of the treatment couch 1. The first non-tactile user input means 17 for example are positioned under the lying surface 2. The first non-tactile user input means 17 can however also be positioned next or on the lying surface 2 or can for example be worn by the user of the treatment couch 1. When the first non-tactile user input means 17 are provided to record sound, they are preferably provided on a location which allows sounds of the user to be easily recorded. For example, when the first non-tactile user input means 17 are worn by the user near their mouth, sounds made by the mouth of the user, such as vocal commands, can be more easily and precisely recorded. When the user generally is near the treatment couch 10 when using the treatment couch 10, the first non-tactile user input means 17 can be provided on the treatment couch 10, for example near the centre of the treatment couch 10 or near the head supporting part 3 when the user in general is near the head supporting part 3. When providing the first non-tactile user input means 17 on the treatment couch 10 in stead of near the mouth of the user, the user does not need to continuously carry the first non-tactile user input means 17.

The first non-tactile user input 11 preferably is provided to select which of the drive means 6, 7 is connected to the power source 14 such that the second tactile user input 12 activates the selected drive means 6, 7. However, other embodiments are possible.

The second tactile user input 12 for activating the selected drive means 6, 7 shown in figure 3 is switchable between two states; a first state for respectively activating the selected drive means 6, 7 and a second state in which the selected drive means 6, 7 are not activated. By the action of the spring 15, the switch shown in figure 3 always returns to its non-conductive state when not operated by the user such that the selected drive means 6, 7 are not driven by the power source 14.

The switches shown in figure 3 only schematically represent the first non-tactile user input 11 and the second tactile user input 12. It is therefore not critical for the invention that mechanical switches are being used. The different switches or both of the switches can however also be provided in the form of digital electronics such as for example by integrated circuits, processors, etc.

In alternative embodiments of figure 3 the second tactile user input 12 is provided to be switched between more than two states. For example a third state can be provided in which the second tactile user input 12 drives the drive means in a opposite direction of movement as the direction of movement provided by the second tactile user input 12 when it is switched in its first state.

In preferred embodiments of the couch 10 as shown in figure 1 the handsfree operating means 10 comprise a speed control means responsive to tactile input and connected to the drive means 6, 7. The speed control means are provided for controlling speed of the selected drive means proportional to a displacement of the tactile input. This can for example be achieved by providing more than three states between which the second tactile user input can be switched. It is for example possible to increase the speed of the movement driven by the drive means 6, 7 along additional states provided between the first and second state and/or between the second and third state. In a further preferred embodiment the speed is gradually increased/decreased between states between the first and the second state and/or the second and the third state. According to a more preferred embodiment the second tactile user input 12 is provided to substantially continuously increase/decrease the speed between the first and the third state and/or the second and the third state.

For example, the foot switch 12 shown in figure 1 can be provided to be moved between the first position corresponding to the first state and the central position corresponding to the second state, the second position corresponding to the third state. When moving the foot switch 12 towards the first or second position, the speed of the movement of the selected drive means 6, 7 is for example correspondingly increased. When the foot switch 12 moves back to the central position, corresponding to the second state, the speed of the movement is for example correspondingly decreased.

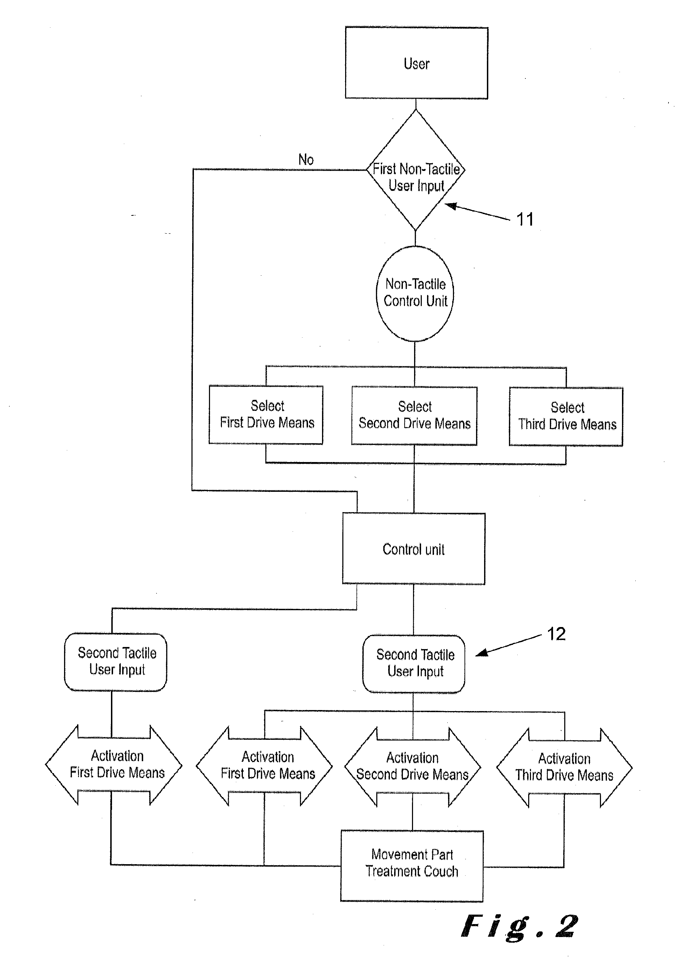

Figure 2 shows a flow chart illustrating an embodiment of operation of a treatment couch according to the invention.

The handsfree operating means 10 preferably are provided to operate one of the drive means 6, 7 as default when no first non-tactile user input has been recorded during a predetermined time frame. The handsfree operating means 10 of the treatment couch 1 more preferably are provided to select the first drive means as default drive means, more preferably such that the lying height of the treatment couch 1 is adjusted when no first non-tactile user input has been recorded during the time frame.

Default drive means 6, 7 however are not critical for the invention and can be omitted. It is also possible, depending on the use of the treatment couch 1 to provide different default drive means 6, 7 than the first drive means 6.

Preferably, the selecting of the default drive means 6, 7 when the time frame has lapsed, is controlled by a control unit of the treatment couch 1.

First a non-tactile command is given by the user. This non-tactile command is received by the first non-tactile user input and subsequently processed by the non-tactile control unit. The non-tactile control unit subsequently selects the drive means 6, 7 corresponding to the first non-tactile command. The selection of the desired drive means 6, 7 is subsequently passed on to the control unit.

When during a certain time frame no first non-tactile command is given to the first non-tactile user input 11, this is recorded by the control unit and the control unit overrides the previous selection made by the non-tactile control unit and selects the default drive means 6, 7.

Since the presence of default drive means 6, 7 is not critical for the invention, as explained above, the control unit can also be omitted.

Subsequently, when the second tactile user input is operated by the user, the selected drive means 6, 7 are activated and the desired part 2, 3, 4, 5 of the treatment couch 1 is moved by the desired drive means 6, 7.

Other methods for operating the treatment couch 1 are however possible and the operation illustrated above is not limiting for the invention.

## Claims

1. Treatment couch (1) comprising a first (6) and a second (7) drive means, the first (6) and second (7) drive means being provided to drive different movements of at least one part (2, 3, 4, 5) of the treatment couch (1), and handsfree operating means (10) for operating the drive means (6, 7) in response to both a first non-tactile user input (11) selecting the drive means (6, 7) to be activated and a second tactile user input (12) for activating the selected drive means (6, 7),
**characterized in that** the operating means (10) are organized such that the selected drive means (6, 7) are activated only as long as the second tactile input (12) is operated by the user.

2. Treatment couch (1) as claimed in claim 1,
**characterized in that** the operating means (10) comprises electronic components which are connected to each other such that the second tactile user input (12), as long as it is operated, closes a conductive connection of the selected drive means (6, 7) to an electric power source.

3. Treatment couch (1) as claimed in claim 1 or 2,
**characterized in that** the second tactile input (12) is switchable between three states; a first and second state for respectively activating the selected drive means (6, 7) in opposite directions of movement and a third state in which the selected drive means (6, 7) are not activated, and **in that** the first non-tactile user input (11) is provided to select which of the drive means (6, 7) is connected to the second tactile user input (12).

4. Treatment couch (1) as claimed in any one of the preceding claims, **characterized in that** the first non-tactile user input (11) is provided for being operated by a voice command.

5. Treatment couch (1) as claimed in any one of the preceding claims, **characterized in that** the second tactile user input (12) is located in a lower part of the treatment couch (1) for being operated by a foot of the user.

6. Treatment couch (1) as claimed in any one of the preceding claims, **characterized in that** the second tactile user input (12) is accessible to the user from all sides of the treatment couch (1 ).

7. Treatment couch (1) as claimed in claim 5 and 6,
**characterized in that** the second tactile user input (12) comprises a foot switch (13) extending substantially throughout the area of the treatment couch (1).

8. Treatment couch (1) as claimed in claim 7,
**characterized in that** the foot switch (13) is provided to activate the selected drive means (6, 7) by a substantially horizontal movement.

9. Treatment couch (1) as claimed in any one of the preceding claims, **characterized in that** the handsfree operating means (10) are provided to operate one of the drive means (6, 7) as default when no first non-tactile user input (11) has been recorded during a predetermined time frame.

10. Treatment couch (1) as claimed in any one of the preceding claims, **characterized in that** the first drive means (6) are provided to adjust the lying height of the treatment couch (1).

11. Treatment couch (1) as claimed in claim 9 and 10, **characterized in that** the first drive means (6) are the default drive means.

12. Treatment couch (1) as claimed in any one of the preceding claims, **characterized in that** the second drive means (7) are provided to adjust the position of a head part (3) of the treatment couch (1) provided to receive the head of a person lying on the treatment couch (1).

13. Treatment couch (1) as claimed in any one of the preceding claims, **characterized in that** the first (6) and/or second (7) drive means comprises a linear actuator (8).

14. Treatment couch (1) as claimed in any one of the preceding claims, **characterized in that** the handsfree operating means (10) comprise a speed control means responsive to tactile input and connected to the drive means (6, 7), the speed control means being provided for controlling speed of the selected drive means (6, 7) proportional to a displacement of the tactile input.
